# EUROPÄISCHE PATENTSCHRIFT

(11) **EP 2 205 377 B1**
(45) Veröffentlichungstag und Bekanntmachung des Hinweises auf die Patenterteilung: **27.06.2012**
(21) Anmeldenummer: 08804241.1
(22) Anmeldetag: 16.09.2008
(51) Int. Cl.: B21J 5/12, B21K 21/00, F01D 25/16, F02C 6/12, F16C 17/04, F16C 33/10, F16C 33/14

(54) **VERFAHREN ZUR HERSTELLUNG EINER SCHMIERMITTELZUFÜHRUNG EINES AXIALLAGERS**
METHOD FOR PRODUCING A LUBRICANT FEED OF AN AXIAL BEARING
PROCÉDÉ DE RÉALISATION D'UNE ALIMENTATION EN LUBRIFIANT D'UN PALIER AXIAL

(30) Priorität: 31.10.2007 DE 102007052102
(43) Veröffentlichungstag der Anmeldung: 14.07.2010
(73) Patentinhaber: Continental Automotive GmbH, 30165 Hannover (DE)
(72) Erfinder: FRANKENSTEIN, Dirk, 67550 Worms (DE); HAUSCHILD, Dag, 77654 Offenburg (DE); HAUSER, Johann, 93170 Bernhardswald (DE); HELD, Jochen, 67295 Bolanden-Weierhof (DE); NOWACK, Stefan, 67292 Kirchheimbolanden (DE); VIESSMANN, Konrad, 90562 Kalchreuth (DE)
(86) Internationale Anmeldenummer: PCT/EP2008/062282
(87) Internationale Veröffentlichungsnummer: WO 2009/056393

(56) Entgegenhaltungen:
- EP-A- 1 452 250
- EP-A- 1 619 356
- GB-A- 710 958
- US-A- 4 639 148
- US-A- 5 308 169
- US-A- 6 122 951

## Beschreibung

Die Erfindung betrifft ein Verfahren zur Herstellung einer Schmiermittelzuführung eines Axiallagers und ein Axiallager, das insbesondere bei Turboladern, beispielsweise in Kraftfahrzeugen eingesetzt werden kann.

Im Allgemeinen dienen Turbolader dazu, den Wirkungsgrad eines Verbrennungsmotors zu verbessern und damit dessen Leistung zu steigern. Im Gehäuse des Turboladers ist hierzu eine Welle um die Längsachse drehbar gelagert, beispielsweise mittels zweier Radiallager. Auf der Welle sind entsprechend ein Turbinenrad und ein Verdichterrad angeordnet. Aufgrund von Fluidströmungen, die an dem Turbinenrad und dem Verdichterrad angreifen, können starke Axialkräfte auftreten. Solche Axialkräfte können von den Radiallagern im Allgemeinen nicht geeignet aufgenommen werden. Deshalb werden normalerweise wenigstens ein oder zwei zusätzliche Axiallager vorgesehen, um diese Axialkräfte geeignet aufzunehmen.

An die Lagerung der Welle eines Turboladers werden normalerweise sehr hohe Anforderungen gestellt. So ist der Turbolader hohen Temperaturen ausgesetzt, da beispielsweise heißes Abgas zum Antreiben des Turbinenrads verwendet wird. Des Weiteren erreicht die Welle eines Turboladers sehr hohe Drehzahlen von beispielsweise bis zu 300.000 U/min. Hierdurch müssen die sich drehenden Teile des Turboladers sehr genau ausgewuchtet sein, um das Auftreten von Schwingungen möglichst gering zu halten.

Aus dem Stand der Technik, wie er in der DE 693 09 860 T2 offenbart ist, ist ein Axiallager bekannt. Das Axiallager ist dabei ein relativ dünnes und im Wesentlichen zylindrisches Teil mit flachen gegenüberliegenden Seiten und einer Aussparungsnut an seinem unteren Rand. Des Weiteren ist das Axiallager mit einem Ölreservoir ausgestattet. Das Ölreservoir ist im Wesentlichen ein rechteckiger Blindschlitz, der in dem Hauptkörperteil des Axiallagers gebildet ist und sich nicht vollständig durch das Axiallager erstreckt. Das Ölreservoir ist mit einer Mittelbohrung durch einen gebohrten Durchgang verbunden.

Drucklager, wie sie in der DE 693 09 860 T2 offenbart sind, bei denen eine außen liegende Öltasche über eine Bohrung mit einer weiter innen liegenden Mittelbohrung zur Ölzuführung verbunden ist, haben jedoch in der Produktion den Nachteil, dass sich Späne und Grate bilden. Die Bohrung kann daher durch die Metallspäne sehr leicht verstopfen, wenn diese nicht sauber entfernt werden. Grate die sich an der Bohrung bilden können des Weiteren ebenfalls zu einer Verengung der Bohrung führen, wenn die Grate hierbei in die Bohrung hineinragen.

Des Weiteren ist in der EP 1 619 356 A1 ein Axiallager offenbart, mit einem im Wesentlichen scheibenförmigen Lagerkörper mit einer zentralen Durchtrittsöffnung für die Welle. Das Axiallager weist des Weiteren mindestens eine die Durchtrittsöffnung umgebende Lagerfläche auf, für einen an der Welle angeordneten Bund. Hierbei ist ein Ölversorgungskanal vorgesehen, der sich von einem radial äußeren Bereich des Lagerkörpers zu der Durchtrittsöffnung erstreckt. Der Ölversorgungskanal ist dabei in Form einer Nut ausgeprägt, die mittels eines Gesenkschmiede-, Fräs- oder Stanzverfahrens hergestellt werden kann.

Demnach ist es die Aufgabe der vorliegenden Erfindung, ein alternatives Verfahren zur Ausbildung einer Schmiermittelzuführung eines Axiallagers bereitzustellen, wobei die Schmiermittelzuführung nicht durch Grate oder Späne verstopft werden kann.

Diese Aufgabe wird durch ein Verfahren mit den Merkmalen des Patentanspruchs 1 gelöst.

Demgemäß wird erfindungsgemäß ein Verfahren zur Herstellung einer Schmiermittelzuführung in einem Axiallager bereitgestellt, wobei die Schmiermittelzuführung als ein Kanal ausgebildet ist, welcher Schmiermittel aus einer Schmiermitteltasche des Axiallagers führt, mit den Schritten:
a) Bereitstellen einer Axiallager-Ausgangsform,
b) Einprägen einer Nut (30) auf einer ersten Seite (20) des Axiallagers in dem Bereich der Ausgangsform, in dem der Kanal vorgesehen ist,
c) Einprägen und Durchstellen von Material auf einer zweiten Seite (26) des Axiallagers auf wenigstens einer oder beiden Seiten der Nut entlang zumindest eines Abschnitts der Nut (30),
d) Zusammenprägen des Materials (34) auf zumindest einer Seite der Nut (30) nach innen in Richtung der Mitte der Nut (30), so dass das Material mit der Nut (30) den Kanal bildet.

Das Verfahren hat dabei den Vorteil, dass ein Kanal als Schmiermittelzuführung ausgebildet werden kann, insbesondere auch ein zumindest teilweise oder vollständig geschlossener Kanal, bei welchem durch das Herstellungsverfahren keine Späne oder Grate entstehen, die den Kanal verengen oder verstopfen können. Die Schmierfunktion des Axiallagers durch die Schmiermittelzuführung bzw. den Kanal kann somit sichergestellt werden.

Vorteilhafte Ausgestaltungen und Weiterbildungen der Erfindung ergeben sich aus den Unteransprüchen sowie der Beschreibung unter Bezugnahme auf die Zeichnungen.

Gemäß einer Ausgestaltung der Erfindung weist der Schritt d) auf, dass das Material auf einer oder beiden Seiten der Nut soweit hin zu der Nut geprägt wird, dass das Material mit der Nut einen offenen, zumindest teilweise geschlossenen oder vollständig geschlossenen Kanal bildet. Auf diese Weise können in einem spanlosen Verfahren Kanäle gebildet werden, die die bis dahin bekannten gebohrten Kanäle ersetzen, bei denen Späne und Grate während des Bohrens entstehen können.

In einer weiteren erfindungsgemäßen Ausführungsform weist das Verfahren weiter den Schritt des Planierens der Oberfläche des Kanals auf, so dass das Axiallager einen ebenen Kanal aufweist. Auf diese Weise kann je nach Funktion und Einsatzzweck ein Axiallager bereitgestellt werden, das im Wesentlichen flach bzw. planar ausgebildet ist, wobei das Axiallager dabei über die gesamte Fläche planar ausgebildet sein kann oder in Bereichen, wie beispielsweise der Schmiermittelzuführung bzw. des Kanals.

In einer anderen erfindungsgemäßen Ausführungsform weist der Kanal eine Einprägtiefe in dem Axiallager auf, die ausreichend ist, um eine Schmiermitteltasche mit einem Segmentabschnitt auf der derselben Seite und/oder auf der gegenüberliegenden Seite des Axiallagers zu verbinden. Auf diese Weise können die Segmentabschnitte auf zwei Seiten des Axiallagers mit Schmiermittel versorgt werden, wobei nur ein Kanal vorgesehen werden muss. Dadurch können zusätzliche Fertigungskosten eingespart werden.

Gemäß einer weiteren erfindungsgemäßen Ausführungsform wird ein Axiallager bereitgestellt, mit wenigstens einer Schmiermittelzuführung, die gemäß dem erfindungsgemäßen Verfahren hergestellt ist. Ein solches Axiallager hat den Vorteil, dass die Schmiermittelzuführung keine Grate oder Späne aufweist, insbesondere wenn die Schmiermittelzuführung teilweise oder vollständig geschlossen ausgebildet ist. Dies ist mittels Bohren der Schmiermittelzuführung, wie aus dem Stand der Technik bekannt ist, nur mit zusätzlichem Aufwand möglich.

Die Erfindung wird nachfolgend anhand der in den schematischen Figuren der Zeichnungen angegebenen Ausführungsbeispiele näher erläutert. Es zeigen:
- Fig. 1: eine Draufsicht auf ein Axiallager gemäß dem Stand der Technik;
- Fig. 2: eine Schnittansicht A-A des Axiallagers des Standes der Technik gemäß Fig. 1, und
- Fig. 3a-e: schematische Schnittansichten der Herstellungsschritte einer Schmiermittelzuführung eines erfindungsgemäßen Axiallagers.

In allen Figuren sind gleiche bzw. funktionsgleiche Elemente und Vorrichtungen - sofern nichts anderes angegeben ist - mit denselben Bezugszeichen versehen worden.

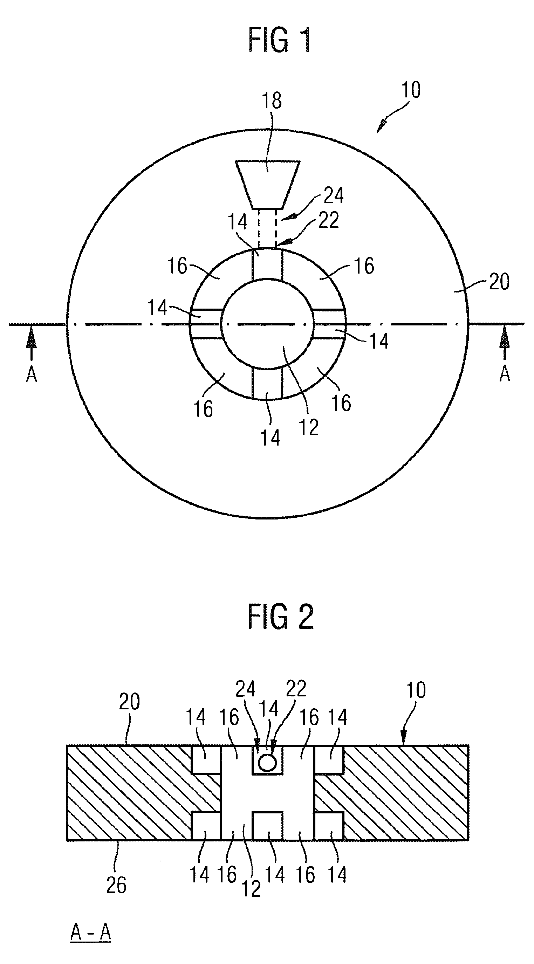

In Fig. 1 ist eine perspektivische Draufsicht eines Beispiels für ein Axiallager 10 gemäß dem Stand der Technik dargestellt.

Das Axiallager 10 weist dabei in der Mitte eine Durchtrittsöffnung 12 auf, in der beispielsweise die Welle (nicht dargestellt) eines Turboladers hindurchgeführt wird. Des Weiteren ist ein Segmentbereich 14 um die Durchtrittsöffnung 12 des Axiallagers 10 angeordnet. Der Segmentbereich 14 weist dabei beispielsweise vier Segmente 16 auf, die Anlageflächen bilden. Die Segmente 16 sind hierbei beispielsweise keilförmig ausgebildet und radial um die Durchtrittsöffnung 12 angeordnet. Dabei können die Segmente 16 auch zusätzlich mit einer Schräge versehen sein.

Des Weiteren ist wenigstens eine Schmiermitteltasche 18 auf wenigstens einer ersten Seite 20 des Axiallagers 10 vorgesehen. Die Schmiermitteltasche 18 ist dabei außerhalb des Segmentbereichs 14 angeordnet. Von der Schmiermitteltasche 18 wird eine Schmiermittelzuführung 22 zu dem Segmentbereich 14 gebildet, indem eine Bohrung 24 vorgesehen wird, die die Schmiermitteltasche 18 mit dem Segmentbereich 14 verbindet, um diesem Schmiermittel bzw. Schmieröl zuzuführen.

Solche Bohrungen 24 als Schmiermittelzuführung haben jedoch den Nachteil, wie oben bereits beschrieben wurde, dass sich Späne und Grate bilden, wobei die Späne schwer zu entfernen sind und außerdem zu einer Verengung oder sogar zu einer Verstopfung der Bohrung 24 führen können. Entsprechendes gilt auch für die Grate. Diese müssen, wie die Späne, in einem zusätzlichen Arbeitsschritt entfernt werden, um zu verhindern, dass diese beispielsweise in die Bohrung 24 hineinstehen und diese ungewollt Verengen, was zu einer erheblichen Beeinträchtigung der Funktionsweise des Axiallagers führt. Solche zusätzlichen Arbeitsschritte und eine entsprechende Nachkontrolle des Axiallagers bzw. dessen Schmiermittelzuführung führen jedoch zu zusätzlichen Kosten.

In Fig. 2 ist das Axiallager 10 des Standes der Technik gemäß Fig. 1 in einer Schnittansicht A-A dargestellt. Dabei ist der Segmentbereich 14 in Form einer Vertiefung gezeigt. Des Weiteren sind die Segmente 16 dargestellt, die in dem Segmentbereich 14 angeordnet sind. Darüber hinaus ist die Bohrung 24 dargestellt, die die Schmiermitteltasche 18 mit dem Segmentbereich 14 verbindet. Der Segmentbereich 14 und die Segmente 16 sind hierbei auf der ersten und zweiten Seite 20, 26 des Axiallagers 10 vorgesehen.

Erfindungsgemäß wird nun ein Axiallager 10 bereitgestellt, vergleichbar dem wie es in Fig. 1 und 2 dargestellt ist. Grundsätzlich kann das erfindungsgemäße Axiallager 10 auch jede andere Ausgestaltung aufweisen, als die in den Fig. 1 und 2. Entscheidend ist, dass die Schmiermittelzuführung 22, die eine Schmiermitteltasche 18 des Axiallagers 10 beispielsweise mit wenigstens einem Segmentbereich 14 verbindet, in einem spanlosen Verfahren hergestellt wird, im Gegensatz zu dem gebohrten Kanal 24 gemäß dem Stand der Technik.

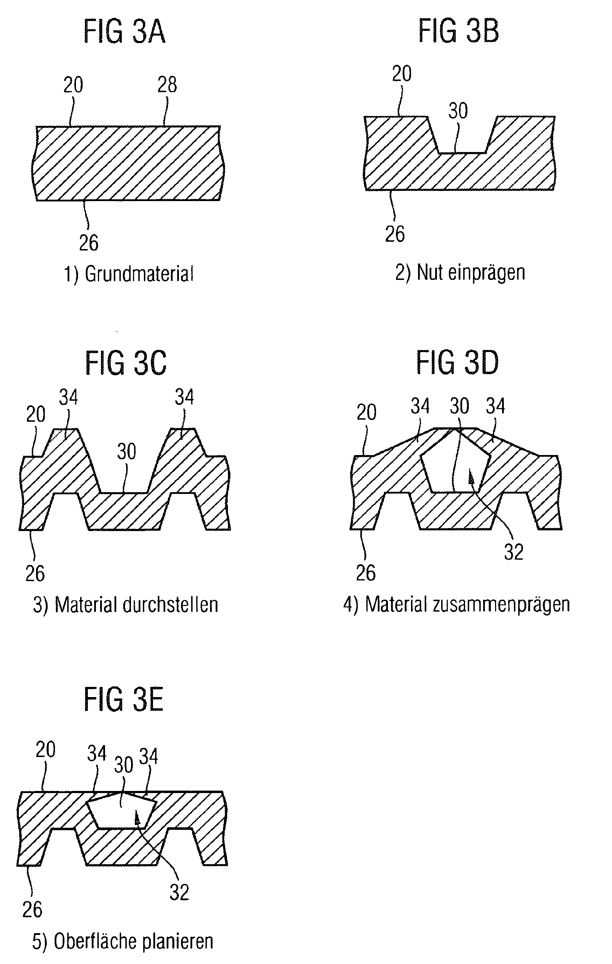

Die Schritte des erfindungsgemäßen Verfahrens sind dabei in den Fig. 3a bis 3e gezeigt.

In Fig. 3a ist zunächst beispielsweise ein im Wesentlichen flaches Ausgangsmaterial bzw. eine Axiallager-Ausgangsform 28 gezeigt, beispielsweise aus Metall oder einer Metalllegierung. Die Dicke des Ausgangsmaterials bzw. der Ausgangsform 28 kann dabei im Wesentlichen der Dicke des fertigen Axiallagers 10 entsprechen oder später auf die entsprechende Dicke gebracht werden.

In diesem Zusammenhang ist es möglich, dass die Axiallager-Ausgangsform 28 bereits zumindest teilweise bearbeitet wurde, um das spätere fertige Axiallager 10 zu bilden. Wahlweise können dabei im Anschluss an die Ausbildung einer Schmiermittelzuführung 32 weitere Bearbeitungsschritte folgen, um das fertige Axiallager herzustellen. Alternativ kann die Schmiermittelzuführung 32 auch als letzter Bearbeitungsschritt ausgeführt werden oder beispielsweise auch als erster Bearbeitungsschritt zu Beginn der Herstellung des Axiallagers 10 oder einer der ersten Bearbeitungsschritte.

Mit anderen Worten, die Herstellung der Schmiermittelzuführung 32 wird in eine Abfolge von Bearbeitungsschritten zur Herstellung des Axiallagers 10 sinnvoll bzw. geeignet eingegliedert, so dass das Axiallager sich beispielsweise einfach und kostengünstig herstellen lässt.

In einem ersten Schritt wird nun, wie in Fig. 3b schematisch dargestellt ist, zunächst eine Nut 30 auf einer ersten Seite 20 des Ausgangsmaterials 28 eingeprägt, auf der der Kanal 32 vorgesehen werden soll. Die Nut 30 wird dabei derart eingeprägt, dass sie die Schmiermitteltasche 18 beispielsweise mit einem Segmentbereich verbindet, ähnlich dem wie er beispielsweise in Fig. 1 dargestellt ist. Wie zuvor bereits angeführt, ist das Axiallager 10 in Fig. 1 lediglich ein Beispiel von vielen für die Ausführung eines Axiallagers 10.

In einem weiteren Schritt, wie in Fig. 3c gezeigt ist, wird von der zweiten Seite 26 des Ausgangsmaterials 28 rechts und links von der Nut 30 Material 34 ebenfalls mittels Einprägen durchgestellt. Das heißt, dass Material 34 wird nicht einfach ausschließlich zur Seite verdrängt, sondern wird im Wesentlichen zu der ersten Seite 20 des Ausgangsmaterials 28 hingedrückt bzw. herausgedrückt oder durchgestellt. Dieses Einprägen des Ausgangsmaterials von der zweiten Seite 26 aus wird über die gesamte Länge oder zumindest über wenigstens einen Teil der Länge der Nut 30 durchgeführt, um später daraus einen Kanal 32 zu bilden. Die Länge kann dabei abhängig davon gewählt werden, ob der Kanal 32 über seine gesamte Länge beispielsweise zumindest teilweise oder vollständig geschlossen ausgebildet werden soll oder beispielsweise wenigstens einen zusätzlichen offenen Abschnitt aufweisen soll. Dabei kann die Menge bzw. die Höhe des durchgestellten Materials rechts und links von der Nut 30 gleich oder unterschiedliche sein, je nach Funktion oder Einsatzzweck.

Gemäß dem nächsten Schritt, wie er in Fig. 3d dargestellt ist, wird das zuvor auf die erste Seite 20 des Ausgangsmaterials 28 durchgedrückte Material 34 nach innen beispielsweise zu der Mitte der Nut 30 hin zusammengeprägt, um den Kanal bzw. die Schmiermittelzuführung 32 auszubilden. Dabei wird das auf der rechten und linken Seite der Nut 30 hervorstehende Material 34 soweit zusammengeprägt, dass das Material 34 beispielsweise in der Mitte zusammenkommt, um einen im Wesentlichen nach oben geschlossenen Kanal bzw. Schmiermittelzuführung 32 auszubilden.

Je nach Funktion und Einsatzzweck kann der Kanal 32 auch nach oben offen ausgebildet werden (nicht dargestellt) bzw. teilweise geschlossen ausgebildet werden. In diesem Fall wird das Material 34, das rechts und links von der Nut 30 hervorsteht, nur soweit zusammengeprägt, dass der Kanal 32 nach oben immer noch zumindest teilweise offen bleibt bzw. nicht vollständig geschlossen ist.

Das Material 34 steht dabei in beiden Fällen jedoch von der ersten Seite 20 des Ausgangsmaterials 28 zunächst ab, wie bei der Variante des geschlossenen Kanals 32 in Fig. 3d gezeigt ist.

In einem zusätzlichen, nächsten Schritt, wie der schematisch in Fig. 3e dargestellt ist, wird daher bei Bedarf die Oberfläche der ersten Seite 20 zumindest über dem gebildeten Kanal 32 bzw. der Schmiermittelzuführung planiert, so dass eine im Wesentlichen plane Oberfläche erzielt wird. Das bedeutet, dass das in Fig. 3d nach oben stehende Material 34 über der Nut 30 eben planiert wird. Dabei kann die Dicke auf die Dicke des fertigen Axiallagers 10 abgestimmt werden. Das Verfahren und das so erhaltene Axiallager 10 haben den Vorteil, dass in wenigen Prozessschritten ein Kanal bzw. eine Schmiermittelzuführung 32 hergestellt werden kann, welche die Schmiermitteltasche 18 beispielsweise mit dem Segmentbereich verbindet, wobei keine Späne oder scharfen Grate entstehen können, die in gesonderten Arbeitsschritten sorgfältig entfernt werden müssen.

In diesem Zusammenhang muss die Nut 30 als Schmiermittelzuführung des Axiallagers auch nicht unbedingt einen eckigen Querschnitt aufweisen, wie beispielsweise in Fig. 3e gezeigt ist, sondern kann einen beliebigen Querschnitt aufweisen, beispielsweise einen runden, ovalen usw..

Des Weiteren ist auch denkbar, statt auf beiden Seiten der Nut 30 Material 34 durchzuprägen, wie in Fig. 3c gezeigt ist, nur auf einer Seite der Nut 30 Material 34 durchzuprägen. Dabei kann das Material 34 auf einer Seite der Nut 30, wie in Fig. 3d gezeigt ist, zu der Nut hingeprägt werden, so dass es mit der Nut 30 einen Kanal 32 bildet. Bei Bedarf kann die Oberfläche des Kanals 30 entsprechend planiert werden, wie in Fig. 3e gezeigt ist, wenn das Material 34 nach dem Hinprägen zu der Nut 30 von der Oberfläche des Axiallagers 10 noch unerwünscht hervorsteht, wie in Fig. 3d gezeigt ist.
Des Weiteren ist auch denkbar, die Nut 30 derart tief einzuprägen bzw. den Kanal 32, so dass dieser eine Schmiermitteltasche mit einem Segmentbereich auf der ersten und/oder zweiten Seite 20, 26 des Axiallagers 10 verbindet.

Des Weiteren können die einzelnen Bearbeitungsschritte, wie sie zuvor anhand der Fig. 3b bis 3e beschrieben wurden, nicht nur aufeinander folgend durchgeführt werden. Es können stattdessen auch einzelne Schritte in einem Arbeitsschritt zusammengefasst bzw. durchgeführt werden. So kann beispielsweise das Einprägen der Nut (Fig. 3b) und das Durchstellen des Materials (Fig. 3c) in einem Arbeitsschritt erfolgen, oder beispielsweise das Zusammenprägen des Materials (Fig. 3d) und das Planieren der Oberfläche (Fig. 3e), um zwei Beispiele zu nennen.

Obwohl die vorliegende Erfindung vorstehend anhand der bevorzugten Ausführungsbeispiele beschrieben wurde, ist sie darauf nicht beschränkt, sondern auf vielfältige Art und Weise modifizierbar.

Dabei ist vorliegende Erfindung insbesondere nicht auf eine Ausgestaltung eines Axiallagers 10 gemäß Fig. 1 und 2 beschränkt, sondern kann auf alle möglichen Ausführungsformen von Axiallagern angewendet werden, bei denen wenigstens ein Kanal als Schmiermittelzuführung vorgesehen ist. Das in Fig. 1 und 2 gezeigte Axiallager 10 ist lediglich ein Beispiel, um das erfindungsgemäß Prinzip näher zu erläutern.

Auch kann das erfindungsgemäße Axiallager 10 nicht nur bei Turboladern eingesetzt werden, sondern in jedem anderen Bereich, in welchem Axiallager zur Aufnahme axialer Kräfte benötigt werden.

## Patentansprüche

1. Verfahren zur Herstellung einer Schmiermittelzuführung (32) in einem Axiallager, wobei die Schmiermittelzuführung (32) als ein Kanal (32) ausgebildet ist, welcher Schmiermittel aus einer Schmiermitteltasche des Axiallagers führt, mit den Schritten:
a) Bereitstellen einer Axiallager-Ausgangsform (28),
b) Einprägen einer Nut (30) auf einer ersten Seite (20) des Axiallagers in dem Bereich der Ausgangsform (28), in dem der Kanal (32) vorgesehen ist,
c) Einprägen und Durchstellen von Material auf einer zweiten Seite (26) des Axiallagers auf wenigstens einer oder beiden Seiten der Nut (30) entlang zumindest eines Abschnitts der Nut (30),
d) Zusammenprägen des Materials (34) auf zumindest einer Seite der Nut (30) nach innen in Richtung der Mitte der Nut (30), so dass das Material mit der Nut (30) den Kanal (32) bildet.

2. Verfahren nach Anspruch 1,
**dadurch gekennzeichnet,**
**dass** in Schritt d) das Material auf einer und/oder beiden Seiten der Nut (30) soweit hin zu der Nut (30) geprägt wird, so dass das Material mit der Nut (30) einen offen, zumindest teilweise geschlossenen oder vollständig geschlossenen Kanal (32) bildet.

3. Verfahren nach wenigstens einem der Ansprüche 1 oder 2,
**dadurch gekennzeichnet,**
**dass** das Verfahren weiter den Schritt aufweist:
e) Planieren der Oberfläche des Kanals (32), so dass das Axiallager einen ebenen Kanal aufweist.

4. Verfahren nach wenigstens einem der Ansprüche 1 bis 3,
**dadurch gekennzeichnet,**
**dass** der Kanal (32) eine Einprägtiefe in dem Axiallager aufweist, die ausreichend ist, um eine Schmiermitteltasche mit einem Segmentabschnitt auf der derselben Seite (20) und/oder auf der gegenüberliegenden Seite (26) des Axiallagers zu verbinden.

5. Axiallager, insbesondere für einen Turbolader, mit einer Schmiermittelzuführung (32), die gemäß dem Verfahren nach einem der Ansprüche 1 bis 4 ausgebildet ist.

6. Axiallager nach Anspruch 5,
**dadurch gekennzeichnet,**
**dass** das Axiallager wenigstens eine Schmiermitteltasche und wenigstens einen Segmentabschnitt aufweist, wobei die Schmiermitteltasche mit dem Segmentabschnitt über die Schmiermittelzuführung (32) verbunden ist.

7. Axiallager nach Anspruch 6,
**dadurch gekennzeichnet,**
**dass** die Schmiermitteltasche und der Segmentabschnitt auf der selben Seite (20) des Axiallagers angeordnet sind.

8. Axiallager nach wenigstens einem der Ansprüche 6 oder 7,
**dadurch gekennzeichnet,**
**dass** die Schmiermitteltasche über die Schmiermittelzuführung (32) zusätzlich mit einem Segmentabschnitt auf der gegenüberliegenden Seite (26) des Axiallagers verbunden ist.

9. Axiallager nach wenigstens einem der Ansprüche 5 bis 8,
**dadurch gekennzeichnet,**
**dass** die Schmiermittelzuführung (32) offen, zumindest teilweise geschlossen oder vollständig geschlossen ausgebildet ist.

10. Turbolader mit wenigstens einem Axiallager nach wenigstens einem der Ansprüche 5 bis 9.

## Claims

1. Method for producing a lubricant feed line (32) in a thrust bearing, wherein the lubricant feed line (32) is embodied as a channel (32) which guides lubricant from a lubricant pocket of the thrust bearing, said method comprising the steps of:
a) providing an initial thrust bearing mould (28),
b) stamping a groove (30) on a first side (20) of the thrust bearing in the area of the initial mould (28) in which the channel (32) is provided,
c) stamping and punching-through material on a second side (26) of the thrust bearing on at least one side or on both sides of the groove (30) along at least one section of the groove (30),
d) stamping the material (34) on at least one side of the groove (30) inwards towards the centre of the groove (30) such that the material together with the groove (30) forms the channel (32).

2. Method according to claim 1,
**characterised in that**
in step d) the material is stamped on one side and/or on both sides of the groove (30) so far towards the groove (30) that the material together with the groove (30) forms an open, at least partially closed or completely closed channel (32).

3. Method according to at least one of claims 1 or 2,
**characterised in that**
the method has the additional step of:
e) levelling the surface of the channel (32) such that the thrust bearing has a planar channel.

4. Method according to at least one of claims 1 to 3,
**characterised in that**
the channel (32) is stamped in the thrust bearing to a depth that is sufficient to connect a lubricant pocket to a segment section on the same side (20) and/or on the opposite side (26) of the thrust bearing.

5. Thrust bearing, in particular for a turbocharger, having a lubricant feed line (32) which is embodied in accordance with the method according to one of claims 1 to 4.

6. Thrust bearing according to claim 5,
**characterised in that**
the thrust bearing has at least one lubricant pocket and at least one segment section, with the lubricant pocket being connected to the segment section via the lubricant feed line (32) .

7. Thrust bearing according to claim 6,
**characterised in that**
the lubricant pocket and the segment section are arranged on the same side (20) of the thrust bearing.

8. Thrust bearing according to at least one of claims 6 or 7,
**characterised in that**
the lubricant pocket is additionally connected via the lubricant feed line (32) to a segment section on the opposite side (26) of the thrust bearing.

9. Thrust bearing according to at least one of claims 5 to 8,
**characterised in that**
the lubricant feed line (32) is embodied as open, at least partially closed or completely closed.

10. Turbocharger having at least one thrust bearing according to at least one of claims 5 to 9.

## Revendications

1. Procédé de fabrication d'une alimentation en lubrifiant (32) dans un palier de butée, dans lequel l'alimentation en lubrifiant (32) se présente sous la forme d'un canal (32) qui achemine du lubrifiant à partir d'une poche de lubrifiant du palier de butée, comprenant les étapes consistant à :
a) préparer une ébauche de palier de butée (28),
b) estamper une rainure (30) sur un premier côté (20) du palier de butée dans la zone de l'ébauche (28), dans laquelle est prévu le canal (32),
c) estamper et transférer le matériau sur un second côté (26) du palier de butée le long d' au moins un ou les deux côtés de la rainure (30) d'au moins une section de la rainure (30),
d) estamper ensemble le matériau (34) sur au moins un côté de la rainure (30) vers l'intérieur en direction du centre de la rainure (30) de sorte que le matériau forme, avec la rainure (30), le canal (32).

2. Procédé selon la revendication 1,
**caractérisé en ce que**,
à l'étape d), le matériau est estampé vers la rainure (30) sur un et/ou sur les deux côtés de la rainure (30) jusqu'à ce que le matériau forme avec la rainure (30) un canal (32) ouvert, au moins partiellement fermé ou complètement fermé.

3. Procédé selon au moins l'une quelconque des revendications 1 ou 2,
**caractérisé en ce que**
le procédé comporte en outre l'étape consistant à :
e) aplanir la surface du canal (32) de sorte que le palier de butée présente un canal plan.

4. Procédé selon au moins l'une quelconque des revendications 1 à 3,
**caractérisé en ce que**
le canal (32) présente dans le palier de butée une profondeur d'estampage suffisante pour raccorder une poche de lubrifiant à une section segmentée sur le même côté (20) et/ou sur le côté opposé (26) du palier de butée.

5. Palier de butée, en particulier pour un turbocompresseur, avec une alimentation en lubrifiant (32) réalisée selon le procédé de l'une quelconque des revendications 1 à 4.

6. Palier de butée selon la revendication 5, cara
ctérisé en ce que
le palier de butée présente au moins une poche de lubrifiant et au moins une section segmentée, dans lequel la poche de lubrifiant est raccordée à la section segmentée par l'alimentation en lubrifiant (32).

7. Palier de butée selon la revendication 6, cara
ctérisé en ce que
la poche de lubrifiant et la section segmentée sont agencées sur le même côté (20) du palier de butée.

8. Palier de butée selon au moins l'une quelconque des revendications 6 ou 7,
**caractérisé en ce que**
la poche de lubrifiant est de plus raccordée via l'alimentation en lubrifiant (32) à une section segmentée sur le côté opposé (26) du palier de butée.

9. Palier de butée selon au moins l'une quelconque des revendications 5 à 8,
**caractérisé en ce que**
l'alimentation en lubrifiant (32) se présente ouverte, au moins partiellement fermée ou complètement fermée.

10. Turbocompresseur avec au moins un palier de butée selon au moins l'une quelconque des revendications 5 à 9.
